# EUROPEAN PATENT APPLICATION

(11) **EP 1 916 546 A2**
(43) Date of publication of application: **30.04.2008**
(21) Application number: 07252994.4
(22) Date of filing: 30.07.2007
(51) Int. Cl.: G01V 15/00

(54) **IC memory, as well as, accessing apparatus and validity testing method for use of IC memory**

(30) Priority: 29.08.2006 JP 2006231616
(71) Applicant: Hitachi, Ltd., Chiyoda-ku Tokyo 100-8220 (JP)
(72) Inventor: Fukushima, Shinichiro c/o Hitachi Ltd. Intell. Prop. Group, Chiyoda-ku, Tokyo 100-8220 (JP); Moritani, Masumi, c/o Hitachi Ltd. Intell. Prop. Group, Chiyoda-ku, Tokyo 100-8220 (JP); Higaki, Hiroyuki, c/o Hitachi Ltd. Intell. Prop. Group, Chiyoda-ku, Tokyo 100-8220 (JP); Kobayashi, Yuihi c/o Hitachi Ltd. Intell. Prop. Group, Chiyoda-ku, Tokyo 100-8220 (JP); Honzawa, Atsushi c/o Hitachi Ltd. Intell. Prop. Group, Chiyoda-ku, Tokyo 100-8220 (JP)
(74) Representative: Calderbank, Thomas Roger

(57) **Abstract**

For making difficult to copy data of a RFIDtag, while enabling to detect it when copying the data, easily, but without exerting ill influences upon the existing specification thereof, within the RFID tag 100 is provided a readout exclusive bank, other than banks provided in accordance with the existing specification. RFID identification information is stored into the readout exclusive bank of the RFID tag 100, when the RFID tag 100 is shipped out of a maker. A user who wishes to guarantee properness of UII data produces cryptograph calculation result data through encrypting the RFID identification information and the UII data, when writing the UII data into the RFID tag 100, and stores the cryptograph calculation result data into a USER bank within the RFID tag 100. Other users, who wish to read out the UII data from the RFID tag 100, read out the RFID identification information and the UII data from the RFID tag 10, so as to conduct cryptography calculation thereon, and can make determination on whether the data stored in the RFID tag is proper one or not, by making a check upon coincidence between the calculation result and the calculation result data stored in the RFID tag 100.

## Description

The present invention relates to an IC memory having a plural number of memory portions therein, such as, a RFIF (Radio Frequency IdentI/Fication) tag, for example, representatively, and it also relates to a technology for accessing and/or controlling such the IC memory, etc.

For the RFIF tags, there are various specifications made for fitting with various ways of using thereof, up to recent years, but as a standard, in particular, for the RFIF tag of UHF band, which is aimed for use, mainly in a business world of distribution, for example, the RFIF tag, in accordance with ISO/IEC 18000-6 Type C, it is able to have a plural number of rewritable memory portions, each of which is called "bank", and ID data of the RFID can be stored in a UII bank. In a TID bank can be stored information of a maker who manufactures the tag. In RESERVED bank can be stored password data. And into a User bank, though being an option area, each of users can store data, freely. Also, each of the banks can be made impossible to rewrite, eternally, with an aid of a password (Non-Patent Document 1).

[Non-Patent Document 1] ISO/IEC 18000-6:2004 Information technology - Radio frequency identI/Fication for item management - Part 6: Parameters for air inteRFace communications at 860 MHz to 960 MHz.

However, with the specification that was determined in accordance with ISO/IEC 18000-6 Type C, there is no clear regulation about internal data within the RFID tag at a time when the RFID tag is delivered from the manufacturer to a user, nor a lock condition for rewriting. Thus, for the RFID tag manufacturing maker, it is not always necessary to ship the tag after writing data into the TIDbank thereof, so that it cannot be rewrite eternally, for example, but it is also possible to issue so-called a white card, i.e., no data is written therein so that anybody can rewrite it later. If no data is written therein, though it is effective from a viewpoint of lowering the manufacturing cost of the RFID tag; however, since anybody can write data therein, freely, therefore it is possible for anybody to make a reproduction or duplicate of the RFID tag, easily, if there is the white card.

With an aid of the password, it is possible to protect the data from being rewritten, however with the banks other than the RESERVED bank storing the password therein, although it is possible to limit the rewriting with an aid of the password, but there is no limitation of readout thereof, then the duplication can be made if it is possible to read out the password therefrom.

Accordingly, an object of the present invention is to provide an IC memory, such as, the RFID tag, for example, for making the data thereof difficult to be reproduced or duplicated, but having ill influences upon the existing specification thereof.

Another object of the present is to provide an IC memory, such as, the RFID tag, for example, for enabling to detect it easily, in particular, when the data thereof is reproduced or duplicated.

According to a first aspect of the present invention, there is provided an IC memory, comprising: a plural number of data memory portions; an antenna, which is configured to conduct transmission of radio waves between an external communication apparatus; a signal process portion, which is configured to conduct modulation/demodulation process upon a signal received on said antenna; and a protocol process portion, which is configured to conduct protocol processing, including transmitting command and data, which are presented by said signal, to said external communication apparatus, writing data into said data memory portion, and managing an internal condition of said IC memory, wherein at least one of said data memory portion is a memory portion for exclusive use of readout, from which data is read out, and other data memory portions than said memory portion for exclusive use of readout are memory portions, on which any one of readout and write-in of data can be made.

According to an embodiment of the present invention, said memory portion for exclusive use of readout is a memory portion, into which the data is written at a fist change after being manufactured or when being manufactured, and after writing mentioned above, the data can be read out only.

According to an embodiment of the present invention, said protocol process portion comprises: a data readout enabling/disenabling setout portion, which is configured to determine an access setup, in relation to enabling/disenabling of readout or write-in, upon the other data memory portions of said memory portion for exclusive use of readout; and an access control portion, which is configured to control the readout and the write-in of said other data memory portions of said memory portion for exclusive use of readout, after determining said access setup, and said memory portion for exclusive use of readout is able to do only readout.

According to an embodiment of the present invention, within said memory portion for exclusive use of readout is stored specific information assigned to said IC memory.

According to a preferred embodiment of the present invention, said specific information stored within said memory portion for exclusive use of readout has a one value selected from the following values A-D:
(A) random values,
(B) serial values, which do not duplicate with specific information assigned to other IC memory and in a continuous relationship with the specific information assigned to said other IC memory,
(C) discontinuous value, which do not duplicate with the specific information assigned to the other IC memory and not in the continuous relationship with the specific information assigned to said other IC memory, and
(D) values equal to the specific information assigned to the other IC memory.

According to an embodiment of the present invention, said specific information stored within said memory portion for exclusive use of readout includes group identification information for identifying to be different from other IC memory groups, which is assigned to a one IC memory group selected from a predetermined number of IC memory groups, and an individual number, which is assigned to said IC memory within said IC memory group selected, and said individual number has a one value selected from the following values A-D:
(A) random values,
(B) serial values, which do not duplicate with specific information assigned to other IC memory and in a continuous relationship with the specific information assigned to said other IC memory,
(C) discontinuous value, which do not duplicate with the specific information assigned to the other IC memory and not in the continuous relationship with the specific information assigned to said other IC memory, and
(D) values equal to the specific information assigned to the other IC memory, and
   selection of which one of said values A-D is depending upon said one IC memory group selected.

According to an embodiment of the present invention, within the other data memory portions of said memory portion for exclusive use of readout is stored calculation result data obtained by conducting a predetermined function calculation upon said specific information.

According to an embodiment of the present invention, within the other data memory portions of said memory portion for exclusive use of readout is stored calculation result data obtained by conducting a predetermined function calculation upon data, including said specific information and a part of the data stored in the other data memory portions.

According to an embodiment of the present invention, said calculation result data is made from cryptography calculation with using a common key or a public key.

According to an embodiment of the present invention, said calculation result data is calculated, but without using the function calculation.

According to an embodiment of the present invention, said IC memory is RFID, and has a RESERVED bank, a UII bank, a TID bank, and a USER bank, as the other data memory portions of said memory portion for exclusive use of readout, and said calculation result data is stored within said USER bank.

According to an embodiment of the present invention, a readout command to said memory portion for exclusive use of readout, to which said protocol process portion can respond, is different from a readout command to the other memory portion, in command code thereof.

According to an embodiment of the present invention, a process is conducted on different protocol, for said external communication apparatus in cases when conducting an readout operation of said memory portion for exclusive use of readout, and when conducting readout and write-in operations onto the other memory portions.

According to a second aspect of the present invention, there is provided an external communication apparatus for conducting communication with the IC memory as described in the first aspect mentioned above, comprising: an antenna, which is configured to conduct transmission of radio waves between said IC memory; a signal process portion, which is configured to conduct modulation/demodulation process upon a signal received on said antenna; a protocol process portion, which is configured to conduct processing on a protocol of an external communication apparatus, transmitting command and data, which are presented by said signal, between said IC memory; and a calculate portion, which is configured to calculate out calculation result data through a predetermined function calculation, wherein said external communication apparatus protocol process portion comprises: a portion, which is configured to read out data from said memory portion for exclusive use of readout within said IC memory; a portion, which is configured to deliver the data, being read out from said memory portion for exclusive use of readout, as said calculation target data to said calculate portion, and to receive the calculation result data, being calculated out by said calculate portion upon basis of said readout data; and a portion, which is configured to write said calculation result data received from said calculate portion into other predetermined data memory portions of said memory portion for exclusive use of readout within said IC memory.

According to a third aspect of the present invention, there is provided an external communication apparatus for conducting communication with the IC memory as described in the first aspect mentioned above, comprising: an antenna, which is configured to conduct transmission of radio waves between said IC memory; a signal process portion, which is configured to conduct modulation/demodulation process upon a signal received on said antenna; a protocol process portion, which is configured to conduct processing on a protocol of an external communication apparatus, transmitting command and data, which are presented by said signal, between said IC memory; anda calculate portion, which is configured to calculate out calculation result data through a predetermined function calculation, wherein said external communication apparatus protocol process portion comprises: a portion, which is configured to readout data from said memory portion for exclusive use of readout within said IC memory; a portion, which is configured to deliver the data, being read out from said memory portion for exclusive use of readout, as said calculation target data to said calculate portion, and to receive the calculation result data, being calculated out by said calculate portion upon basis of said readout data; a portion , which is configured to read out data from a predetermined memory portion other than said memory portion for exclusive use of readout within said IC memory; and a portion, which is configured to determine on whether the data within said IC memory is proper or not, through comparing the calculation result data received from said calculate portion and the data read out from said predetermined memory portion.

Within an embodiment of the external communication apparatus, according to the second and third aspects of the present invention, a process is conducted on different protocol, for said IC memory, in case where a readout command to said memory portion for exclusive use of readout, which said external communication apparatus protocol process portion transmits to said IC memory, is different from a readout command to the other memory portion, or when said external communication apparatus protocol process portion conducts the readout process of said memory portion for exclusive use of readout, or when it conducts the readout process or the write-in process of said other data memory portion.

A system, according to a fourth aspect of the present invention, comprises an IC memory according to the first aspect mentioned above, and an external communication apparatus, according to the second or the third aspect mentioned above.

A system, according to a fifth aspect of the present invention, comprises an IC memory according to the first aspect mentioned above, an external communication apparatus according to the second embodiment mentioned above, and an external communication apparatus according to the third aspect mentioned above.

Amethod, according to a sixth aspect of the present invention, for verifying properness of data within the IC memory according to the first aspect mentioned above, comprises the following steps of: a step for reading out data from said memory portion for exclusive use of readout within said IC memory; a step for obtaining calculation result data by conducting a predetermined function calculation upon the data, which is read out from said memory portion for exclusive use of readout; a step for reading out from a predetermined one of the other data memory portions of said memory portion for exclusive use of readout within said IC memory; and a step for determining on whether the data within said IC memory is proper one or not, after comparing the calculation result data receiving from said calculate portion and the data read out from said predetermined data memory portion.

According to any one of the aspects of the present invention, it is possible to make data of the IC memory, such as, the RFID tag, etc., difficult to be copied or duplicated, but without exerting ill influences upon the existing specification thereof.

Also, according to other aspects of the present invention, it is possible to detect it, in case when copying is made the data of the IC memory, such as, the RFID tag, etc., easily.

Those and other objects, features and advantages of the present invention will become more readily apparent from the following detailed description when taken in conjunction with the accompanying drawings wherein:
Fig. 1 is a view for showing the structures of a system having an RFID tag and an RFID reader/writer apparatus therein, according to an embodiment of the present invention;
Fig. 2 is a view for showing the internal structures of the RFID tag, according to the embodiment of the present invention;
Fig. 3 is a view for showing the internal structures of the RFID reader/writer apparatus, according to the embodiment of the present invention;
Fig. 4 is a view for showing functions of a cryptographic calculation processor portion within the RFID reader/writer apparatus, according to the embodiment of the present invention;
Fig. 5 is a view for showing kinds of banks within the RFID tag and kinds of access settings, which can be set for each of the banks, according to the embodiment of the present invention;
Fig. 6 is a view for showing examples of a plural number of RFID groups, to which the RFID tags can belong, and data, which can be stored into the RFID tag belonging to each of the RFID groups;
Fig. 7 is a view for showing an example of format of an ordinary readout command for the bank, other than that of exclusive use for readout, of the RFID tag, according to the embodiment of the present invention;
Fig. 8 is a view for showing an example of format of a readout command for the bank of exclusive use in readout, according to the embodiment of the present invention;
Fig. 9 is a view for showing the internal structures of the RFID tag having a plural number of different RFID protocol process portions, according to another embodiment of the present invention;
Fig. 10 is a view for showing the internal structures of the RFID reader/writer apparatus having a plural number of different RFID protocol process portions, according to another embodiment of the present invention; and
Fig. 11 is a view for showing a flow of processing for verifying the validity of UII data within the RFID tag, in a system having the RFID tag and the RFID reader/writer apparatus therein, according to another embodiment of the present invention.

The present invention is applicable, not only a RFID tag, but also other kinds of IC tags other than that. However, hereinafter, explanation will be made on the embodiments applying the present invention into the RFID tag, as an example, but for non-restrictive purpose, by referring to the attached drawings.

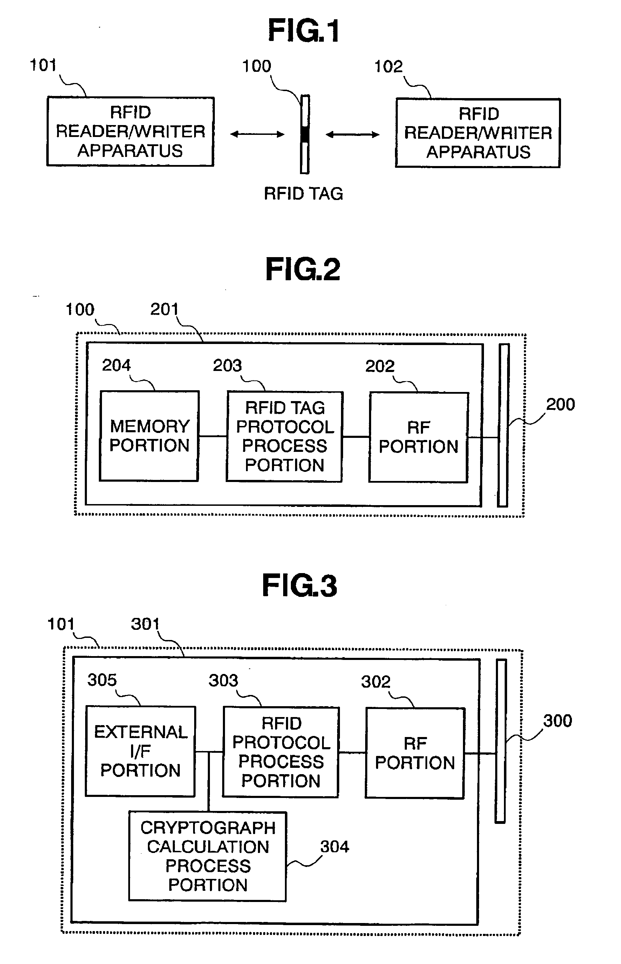

Fig. 1 is a view for showing the structures of a RFID system, being built up with a RFID tag, and at least one or more of RFID reader/writer apparatus (es) as an external communication device, according to the embodiment of the present invention.

The RFID tag 100 can be stored with data through a certain RFID reader/writer apparatus 101, and can be read out with the data by other RFID reader/writer apparatus 102 or the same RFID reader/writer apparatus 101. Of course, there is a case where a large number of RFID tags 100 are provided, or a system having the number of tags larger than that of the RFID reader/writer apparatuses, or a case of a system having only one set thereof.

Fig. 2 is a view for showing the principle internal structures of the RFID tag 100.

The RFID tag 100 comprises an antenna 200 for transmitting radio waves between an external RFID reader/writer apparatus, a RFID tag main body 201, a RF portion 202 for producing operating electric power from the radio waves received on the antenna 200, as well as, for modulating/demodulating signals carried on those radio waves, a RFID tag protocol process portion 203 for conducting transmission of commands and data presented by those signals, reading/writing of data from/into a plural number of memory banks, and processing a protocol, including management of an internal condition of the RFID tag main body 201, etc., and a memory portion 204 for memorizing various kinds of data therein, such as, ID data, or data that a user produces, arbitrarily, etc., for example. The protocol process portion 203 also manages a lock condition on ability/disability of rewriting into the memory portion 204.

Fig. 3 is a view for showing the principle internal structures of the RFID reader/writer apparatus 101 (also other RFID reader/writer apparatus 102 has the similar structures).

The RFID reader/writer apparatus 101 comprises an antenna 300 for transmitting the radio waves between the RFID tag 100, a reader/writer apparatus main body 301, a RF portion 302 for modulating/demodulating the signals carried on those radio waves received on the antenna 200, a RFID tag protocol process portion 303 for transmitting commands and data, which those signals present, as well as, for conducting processing protocols, including management of an internal condition of the RFID reader/writer apparatus main body 301, etc., a cryptography process portion 304 for conducting a calculation process of cryptograph and/or a signature with using a common key and/or a public key, and also execution of a hash function, etc., and an external I/F portion 305 functioning as a management device communication interface, so that the RFID reader/writer apparatus 101 can operate in cooperation with an external management device (not shown in the figure). However, the cryptography process portion 304 is not provided within the RFID tag 100 of itself.

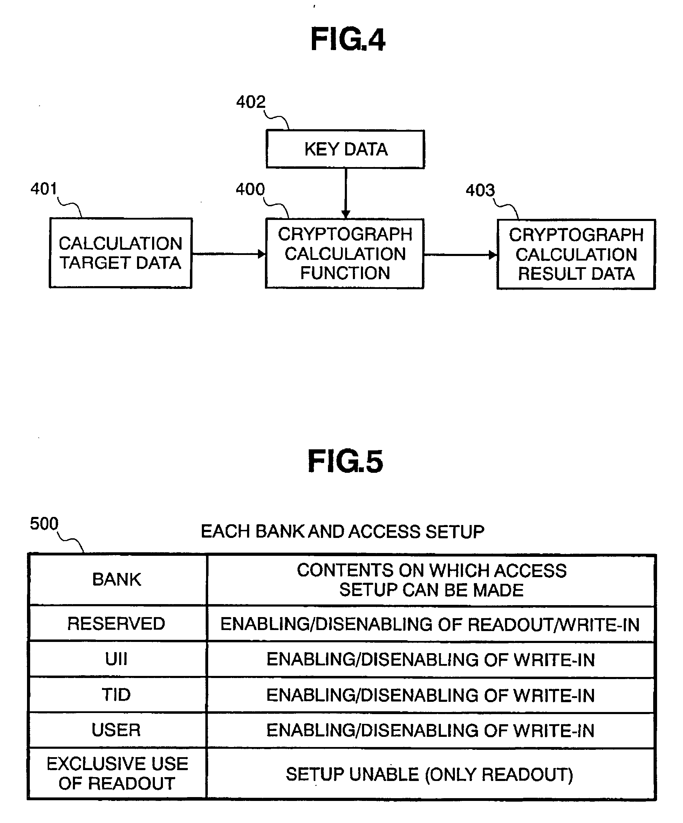

Fig. 4 is a view for simply showing the cryptography process to be executed within the cryptography process portion 304.

The cryptography process portion 304 has a cryptography process function 400, and this may be a common key cryptography process or a public key cryptography process, both of which are well known in general. Although not always must be so, but it is preferable that the cryptography process function 400 is changeable, by taking the cooperation with a security level, which a user requests, and/or an existing system, into the consideration thereof. By delivering calculation target data 401 and key data 402 to the cryptography process function 400, the calculation is executed by means of the cryptography process function 400, and thereby obtaining cryptography process result data 403 upon basis of the calculation target data 401. The key data 402 may be contained within the cryptography process portion 304, like the IC card, for example, or it may be delivered from the external device to the cryptography process function 400 through the external I/F portion 305. The cryptography process portion 304 is able to encrypt data, or to attach data to detect tampering onto the data. With managing the key data 402 within a same group or a user, it is possible to see that data, freely by a third party, or to protect it from being tampered. As a manner for managing the key data 402, it is possible to apply a management method, which is well know in general, for the IC card, etc., for example.

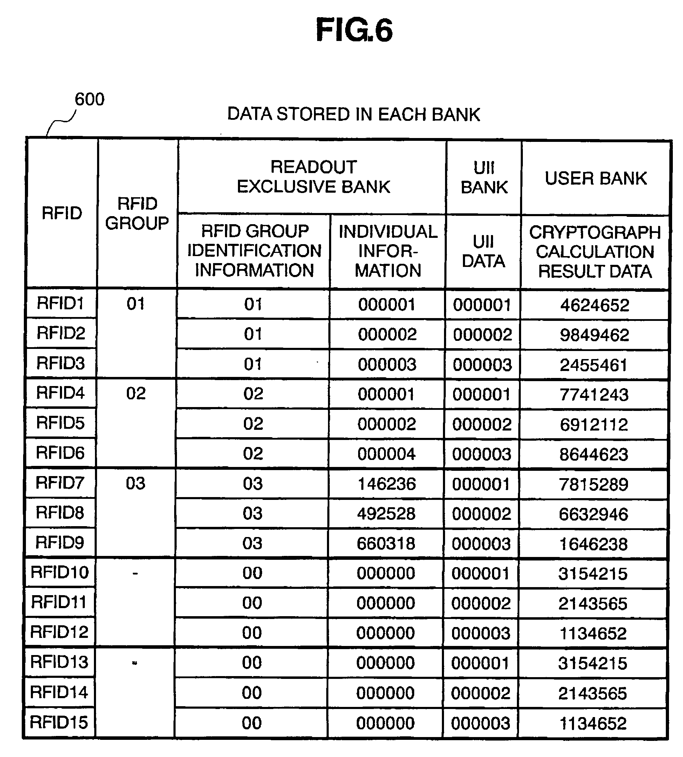

Fig. 5 is a view for showing the structures of the memory portion 204 of the RFID tag 100.

The memory portion 204 has five (5) memory banks, i.e., a RESERVED bank, a UII bank, a TID bank, a USER bank and a bank for exclusive use of readout (i.e., a readout exclusive bank), in this example. Each of those RESERVED bank, UII bank, TID bank and USER bank is made up with a memory, into/from that the data can be written and read out in both directions, like a RAM. On the contrary to this, the readout exclusive bank is made up with a memory, like a write-once memory or ROM, having such the structures for enabling to write data therein, only a first time after being manufactured or during when being manufactured, but thereafter, only enabling to readout data therefrom while disenabling to write data therein, or alternately, through a logical access control conducted by the RFID protocol process portion 203, only enabling to read out data therefrom, after writing the data therein at the first time after being manufactured or during when being manufactured. Within the readout exclusive bank, the RFID readout exclusive bank is that, which is not defined in the existing standard.

The contents, on which can be made an access setting (i.e., the kind of access, which can be controlled by setting), differ from depending upon the kinds of the memory banks. Thus, the RESERVED bank is settable on enabling/disenabling, for each one of the readout and the write-in, but the UII bank, the TID bank and the USER bank are settable on enabling/disenabling, but only for the write-in. With the readout exclusive bank, it is impossible to make the access setting itself, thereon.

Access setting for each bank is conducted by the RFID protocol process portion 203, storing a preset value for each bank into an interior condition hold portion, which is owned by it. The RFID protocol process portion 203 is able to control the accessing of each bank, logically, when it processes a command therein, by referring to the preset value of each bank within the interior condition hold portion. The readout exclusive bank may be made up with a write-once memory so that data may be written therein only one (1) time when issuing the RFID tag 100, or may be made up with a ROM memory so that the data is written therein at the time when manufacturing the RFID tag 100. Although one (1) piece of the memory portion 204 is divided into the banks differing from each other, within the RFID tag 100 according to the present embodiment, but there is no necessity of dividing the one (1) piece of the memory portion 204, as an idea or concept of the bank, and therefore, in the place of a plural number of banks, a plural number of memories may be provided, which are physically separated from each other. For example, the readout exclusive bank may be provided as, not a bank, but an exclusive memory, being physically separated from other banks, or there may be provided, not only by one (1), but a plural number thereof.

Fig. 6 is a list 600 for showing an example of internal data of the RFID tag 100.

Herein, each of the RFID tags 100 is classified into one of a predetermined number of RFID groups. And, for each of the RFID tags 100 are assigned any one of RFID identifier information and also any one of UII data, to be used within a RFID group, into which that tag is classified, and thereby being stored within each of the RFID tags 100. Further, within each of the RFID tags, data is calculated out for testing or verifying the validity or properness of the UII data stored therein, as the cryptography process result data 403 within the cryptography process portion 304 mentioned above, and also that data is stored within each of the RFID tags 100. Fig. 6 shows examples of the kinds of a plural number of RFID groups, to which they belong, the RFID identifier information and the UII data to be used within each of the RFID groups, and the data for verifying the properness of the UII data (i.e., the cryptography process result data 403), by taking fifteen (15) pieces of different RFID tags, "RFID 1" to "RFID 15" as examples.

In the examples shown in Fig. 6, as the RFID identifier information mentioned above, there are RFID group identifier information and individual information. The data of the RFID group identifier information and the individual information, which are assigned to each of the RFID tags 100, are stored into the readout exclusive bank within that RFID tag 100. As the RFID groups, there are three (3) kinds shown by "01", "02", and "03" in Fig. 6, and also one (1) kind shown by "-" meaning that it does not belong to a specific RFID group (but, this is also considered to be one of the RFID groups, in the present specification); four (4) kinds in total, and the RFID group identifier information corresponding thereto are "01", "02", "03", and "00", respectively.

Further, as the individual information are used serial numbers, such as, "000001", "000002", and "000003", for example, which do not duplicate with each other, within the group "01". In the group "02" are used discontinuous (not serial) numbers, such as, "000001", "000002", and "000004", etc., for example, which do not duplicate with each other, within the group "02". Thus, in the group "02", it is possible to remove defective products, easily, by not guaranteeing that the individual information is not serial, and thereby enabling to manufacture the RFID tags, cheaply. In the group "03" are used randomnumbers, such as, "146236", "492528", and "660318", etc., for example. In this group "03", there is a possibility that they duplicate with each other because the individual number is made of the random numbers, but there is no necessity of managing the individual information, and the possibility of duplication is very low if enlarging the data length of the individual information, therefore it is suitable for manufacturing the cheap FRID tags. In the group "-", there is used a one (1) special value for meaning all, such as, "000000", for example. The group "-" is a group for a user who wishes to use the RFID tag, but only in a manner similar to that having the existing specification, and therein, there is no necessity of using the RFID identifier information if the individual information "000000" is set up, or alternately, only the RFID group identifier information "00" may be used, but without using the individual information. The special value as the individual information may be, not only "000000", but also other special value, such as, "111111", for example.

Also, Fig. 6 shows therein an example of the UII data stored into the UII bank. In this example, in any one of the RFID groups, there is used the UII data common with other groups, for example, "00000001", "00000002" or "00000003", etc. Also, Fig. 6 shows therein an example of the cryptography process result data 403, which is stored into the USER bank as the data for verifying the properness of the UII data. In this example, as the calculation target data 401 for obtaining the cryptography process result data 403 is used one combining the "RFID group identifier information", the "individual information", and the "UII data" together. Even though the different RFID tags have the same value on the UII data thereof, such as, "00000001", for example, but the cryptography process result data 403 results into values different from each other, if those FRID tags are different from in the RFID group, to which those RFID tags belongs. However, within the RFID group "-", since any one of the RFID tags are equal in the RFID group identifier information and the individual information, then also the cryptography process result data of those RFID tags come to be the same in case where the UII data of the different RFID tags are equal to each other.

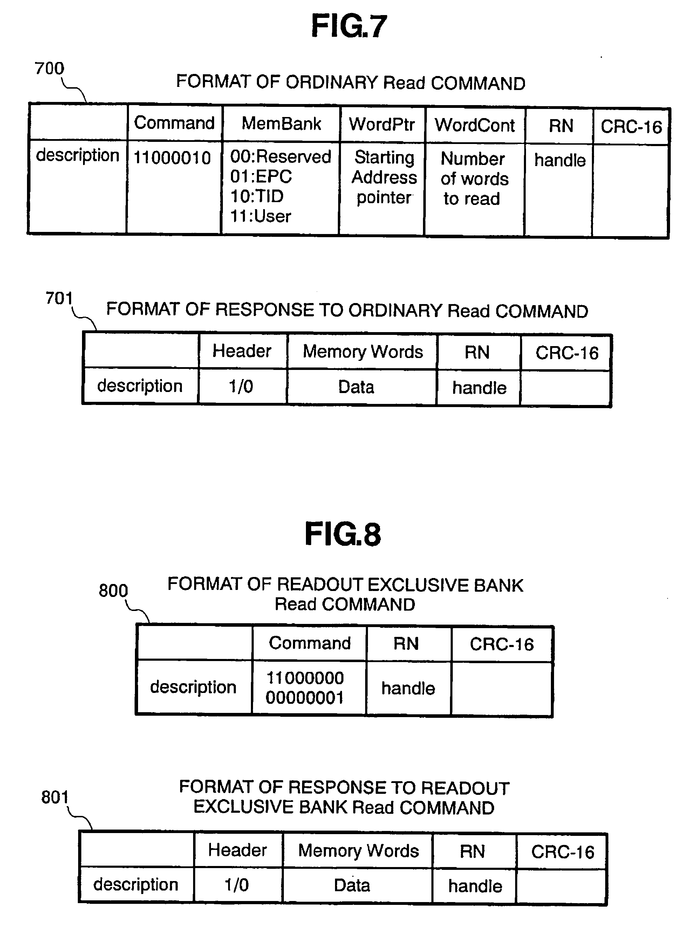

Fig. 7 shows an example of format of an ordinary readout command to be transmitted to the RFID tag 100 (i.e., a readout command to the banks other than the readout exclusive bank), and an example of format of a response to the ordinary readout command, to be transmitted from the RFID tag 100 back to the RFID reader/writer apparatus 101 or 102.

The ordinary readout command is built up with, as is shown by a command format 700, a field for storing a command code value of so-called "Command", a field for storing a parameter designating a bank as a readout target, so-called "MemBank", and a field for storing a parameter designating a kind of a pointer, so-called "WordPtr", therein, etc.

The response to the ordinary readout command is built up with, as is shown by a response format 701, a field for storing a header, and a field for storing the data readout, so-called "Memory Word", therein, etc.

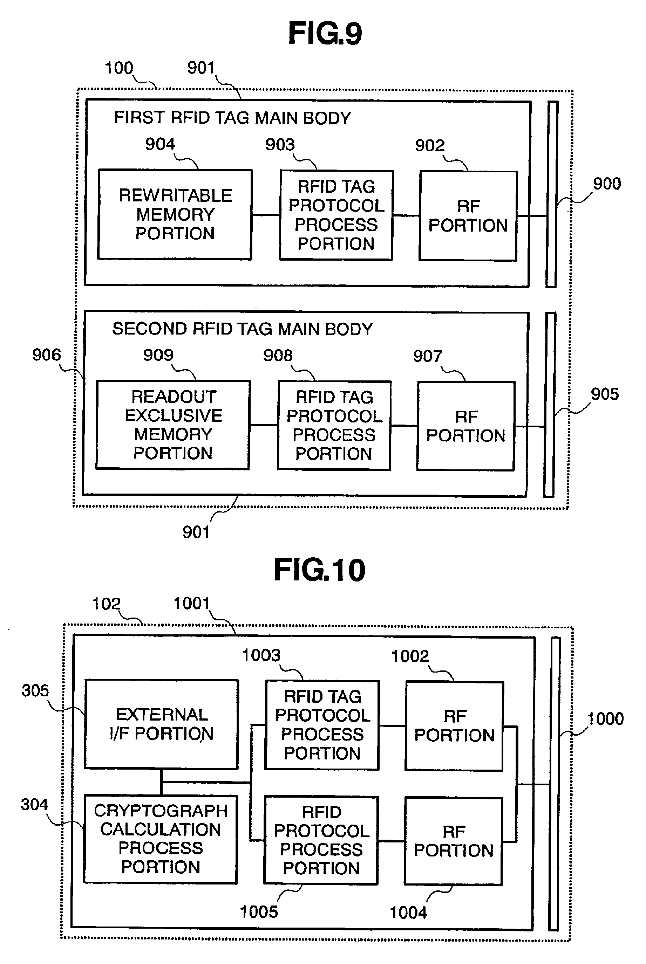

Fig. 8 shows an example of format of a readout command to the readout exclusive bank, to be transmitted from the FRID reader/writer 101 or 102 to the RFID tag 100, and an example of format of the response to the readout command to the readout exclusive bank, to be transmitted from the RFID tag 100 back to the RFID reader/writer apparatus 101 or 102.

The readout comment to the readout exclusive bank is built up with, as is shown by a command format 800, a field for storing a command code value of so-called "Command", and fields for storing other parameters therein, etc. This command format 800 has the structures completely different from the command format 700 of the ordinary readout command shown in Fig. 7, in particular, in the command code value and the parameters. Using such custom commands has no ill influence onto the existing specification.

Fig. 9 shows exemplary structures of the RFID tag 100 having the RFID tag portions corresponding to or supporting two (2) different protocols.

The RFID tag 100 comprises a first RFID tag portion supporting a first protocol (i.e., a portion for functioning as a RFID tag in accordance with, for example, ISO 18000-6 Type C), and a second RFID tag portion supporting a second protocol (i.e., a portion for functioning as a RFID tag supporting the protocol, for example, of 2.45 GHz band) . The first RFID tag portion is able to re-write the data memorized therein, however within the second RFID tag portion, the data memorized therein cannot be re-written, but it can be readout only.

The first RFID tag portion comprises an antenna 900 for transmitting radio waves between an external RFID reader/writer apparatus, a first RFID tag main body 901, a RF portion 902 for producing operating electric power from the radio waves received on the antenna 900, as well as, formodulating/demodulating signals carried on those radio waves, a RFID tag protocol process portion 903 for conducting transmission of commands and data presented by those signals, reading/writing of data from/into a plural number of memory banks within a re-writable memory portion 904, which will be mentioned below, processing of a protocol including management of the internal condition of the first RFID tag main body 901, and the re-writable memory portion 904 for memorizing various kinds of data therein, such as, ID data and user data, etc. Within the re-writable memory portion 904 are provided the RESERVED bank, the UII bank, the TID bank and the USER bank mentioned above.

The second RFID tag portion comprises an antenna 905 for transmitting radio waves between an external RFID reader/writer apparatus, a second RFID tag main body 906, a RF portion 907 for producing operating electric power from the radio waves received on the antenna 900, as well as, for modulating/demodulating signals carried on those radio waves, a RFID tag protocol process portion 908 for conducting transmission of commands and data presented by those signals, reading/writing of data from/into a plural number of memory banks within a re-writable memory portion 909, which will be mentioned below, processing of a protocol including management of the internal condition of the second RFID tag main body 906, and a readout exclusive memory portion storing the RFID group identifier information and/or the individual information, etc., therein. The readout exclusive memory portion 909 is used as the readout exclusive bank mentioned above. For accessing to the readout exclusive memory portion 909, it is necessary to be conducted with a protocol different from that for other memory banks, i.e., a second protocol, different from the first protocol in accordance with the regulation or standard for the existing RFID tag.

As a variation, the RFID tag 100 may have three (3) or more of RFID tags, or alternately it may comprises a plural number of RFID tag portions supporting the protocols which are completely same to each other.

Fig. 10 shows an example of the internal structures of the RFID reader/writer apparatus communicable with the RFID tags, which support the two (2) different protocols, as shown in Fig. 9.

The RFID reader/writer apparatus 102 comprises an antenna 1000 for transmitting the radio waves between the RFID tag 100, a reader/writer apparatus main body 1001, a RF portion 1002 for modulating/demodulating of signals, which present command and data of the first protocol, a RFID protocol process portion 1003 for conducting transmission of commands and data of the first protocol, as well as, processing of a protocol, including management of an internal condition of' the RFID reader/writer apparatus 102 operating on the first protocol, etc., a RF portion 1004 for modulating/demodulating signals presenting the command and data of the second protocol, a conducting a calculation process of cryptograph and/or a signature with using a common key and/or a public key, and also execution of a hash function, etc., and an external I/F portion 305 functioning as a management device communication interface for obtaining an operation in cooperation with an external management device or apparatus (not shown in the figure). In this example, though the different RF portions and the different protocol process portions are provided as for the different protocols, for the purpose of easy under standing thereof, however as a variation thereof, processing may be made on the different protocols within one (1) piece of the RF portion and one (1) piece of the protocol process portion.

With the RFID reader/writer apparatus 102 having such structures shown in Fig. 10, it is possible to deal with the respective data of the re-writable memory portion 904 and the readout exclusive memory portion 909 within the FRID tag 100, having such the structures shown in Fig. 9, differently, by the protocols corresponding thereto. In that instance is used a format that is coincident with that suitable for the respective one of those protocols.

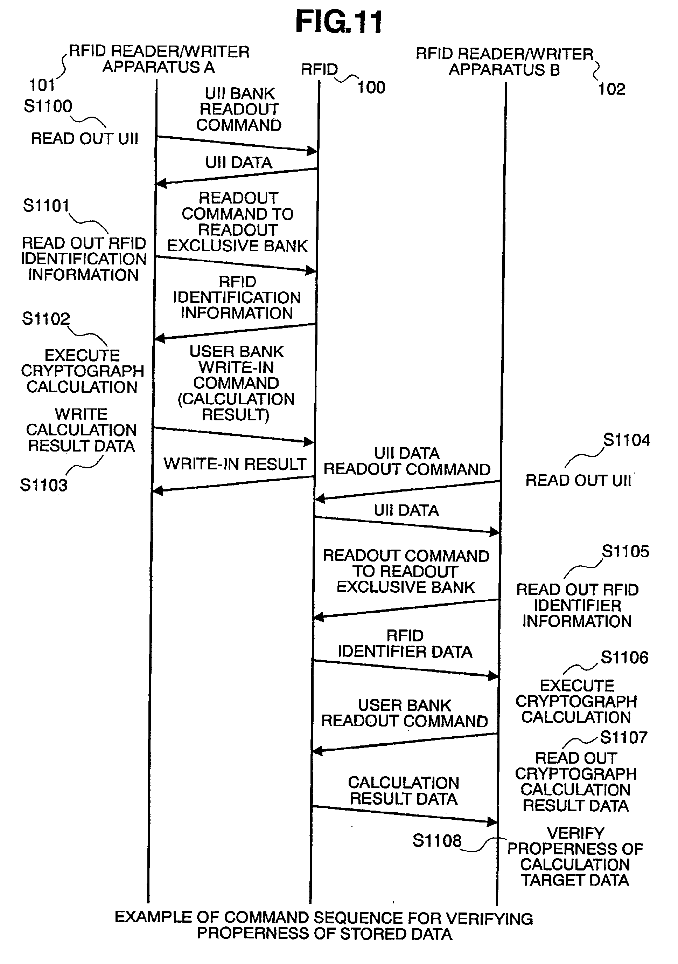

Fig. 11 is a view for showing the processing flow for a user to verify the properness of the UII data within the RFID tag 100.

Herein, it is assumed that the RFID tag 100 is one of the RFID tags, i.e., "FRID 1", belonging to the RFID group "01", as is shown in Fig. 6, exemplarily. However, this is only an unrestrictive exemplary for the purpose of explanation, and the RFID tag may be any one of the RFID tags belonging to the RFID groups "01" to "03".

The process shown in Fig. 11 can be executed for a user of the FRID tag 100, at any time depending upon necessity thereof. Before starting of this process, the RFID group identification information "01" and the individual information "000001" are stored into the readout exclusive bank of the RFID tag 100, and into the UII bank is stored the UII data "00000001", respectively. There is no specific limitation for a subject to conduct those storing activities, but showing a typical example thereof, the activity of storing the RFID group identification information "01" and the individual information "000001" into the readout exclusive bank is made by a maker of the RFID tag 100, for example, before shipping of that RFID tag 100. Also, the activity of storing the UII data "00000001" is conducted by the user, for example. And, for the user who stores the UII data "00000001", it is also possible to store the cryptography process result data, for verifying the properness of the UII data, into the RFID tag 100, if she/he withes to guarantee the properness of that UII data.

The process flow in a first half shown in Fig. 11 shows the processing, for such the user as mentioned above, to store the cryptography process result data for verifying the properness of the UII data into the RFID tag 100. Therefore, at a time instance of starting the process flow shown in Fig. 11, that cryptography process result data mentioned above is not yet stored into the RFID tag 100.

Within the process flow of a second half, as shown in Fig. 11, in a step S1100, a process is executed for reading out the UII data within the RFID tag 100, between the RFID reader/writer apparatus 101, which the above-mentioned user uses, and the RFID tag 100. Thus, a command for reading out the UII bank is transmitted from the RFID reader/writer apparatus 101 to the RFID tag 100. And, from the RFID tag 100 back to the RFID reader/writer apparatus 101 is transmitted a response, i.e., the UII data "00000001".

Thereafter, in a step S1101 is executed a process for reading out the RFID identification information within the readout exclusive bank in the RFID tag 100, between the RFID reader/writer apparatus 101 and the RFID tag 100. Thus, the readout command to the readout exclusive bank is transmitted from the RFID reader/writer apparatus 101 to the RFID tag 100. And, the RFID group identification information "01" and the individual information "000001", which are read out from the readout exclusive bank, are responded from the RFID tag 100 to the RFID reader/writer apparatus 101.

Thereafter, in a step S1102, the calculation process of cryptograph is executed within the.RFID reader/writer apparatus 101. Thus, the data combining the RFID group identification information "01" and the individual information "000001", and the UII data "00000001" is delivered to the cryptography process function 400, as a calculation target data 401, and the cryptography process function 400 delives the data "4624652" for verifying the properness of the UII data, as the cryptography process result data 403. The examples of the key data 402, as well as, the cryptography process function 400, are not shown, in more details thereof, however those are managed by the user who uses RFID group identification information "01".

Thereafter, in a step S1103, a writing process is executed for the cryptography process result data "4624652" mentioned above. Thus, the RFID reader/writer apparatus 101 transmits the write-in command for writing the above-mentioned cryptography process result data "4624652" into the USER bank, to the RFID tag 100. Upon receipt of that write-in command, the RFID tag 100 stored the data "4624652" for use of UII verification, using the RFID identification information in the readout exclusive bank, practically, into the USER bank.

After storing the data "4624652" for use of UII verification, in the manner as was mentioned above, if this RFID tag 100 is used in a distribution business or industry, then this RFID tag 100 will be distributed from one to another, among various users. In this distribution process, the user who has an authority of using the key data 402 and the cryptography process function 400, is able to verify on whether the UII data within the RFID tag 100 is a proper one or not (in other words, whether the RFID tag 100 is a copy (i.e., a duplicate) or not of the other RFID tag), with using the RFID reader/writer apparatus 102, through the process flow shown in the second half in Fig. 11.

Thus, firstly in S1104, a process is executed of reading out the UII data, between the RFID reader/writer apparatus 102 and the RFID tag 100. Thus, a readout command is transmitted from the RFID reader/writer apparatus 102 to the RFID tag 100, and then the UII data "00000001" is responded from the RFID tag 100 back to the RFID reader/writer apparatus 102.

Thereafter, in a step S1105, the process is executed for reading out the RFID identification data. Thus, a readout command to the readout exclusive bank is transmitted from the RFID reader/writer apparatus 102 to the RFID tag 100, and then the RFID group identification information "01" and the individual information "000001" are responded from the RFID tag 100 back to the RFID reader/writer apparatus 102.

Thereafter, in a step S1106 is executed the calculation process of cryptograph. Thus, within the RFID reader/writer apparatus 102, the RFID group identification information "01", the individual information "000001", and the UII data "00000001" are delivered to the cryptography process function 400, as the calculation target data 401, and the cryptography process function 400 derives the data "4624652" for verifying the properness of the UII data, as the cryptography process result data 403.

Thereafter (or, may be in a front of any one of the steps S1104-1106), in a step S1107, a process is executed for reading out the cryptography process result data stored in the USER bank. Thus, a USER bank readout command is transmitted from the RFID reader/writer apparatus 102 to the RFID tag 100, and then the cryptography process result data "4624652" is responded from the RFID tag 100 to the RFID reader/writer apparatus 102.

Thereafter, in a step 1108, a process is executed for verifying the properness of the calculation target data. Thus, within the RFID reader/writer apparatus 102, the RFID protocol process portion compares the cryptography process result data calculated in the step S1106 and the cryptography process result data read out in the step S1107, and if they are coincident with, it is determined that the UII data within the RFID tag 100 is proper data. On the other hand, in case where they are not coincident with, since there can be considered a possibility that a third party tampers or copies the data within the RFID tag 100, the RFID reader/writer apparatus 102 informs an error to the user. However, since the third party, not knowing the key data 402, is unable to obtain the proper or correct cryptography process result data, then it is impossible for the third party to verify the properness of the UII data within the RFID tag 100. This verification may be made, when it is necessary only by a proper user, for example. The ordinary readout of the UII data can be made, but without any problem, with the protocol according to the existing specification.

In this manner, according to the embodiments mentioned above of the present invention, it is possible to make copying of data of the RFID tag difficult, without causing ill influences upon the existing specification, and further, in case when that data is copied, it is possible to detect it, easily, through the verification mentioned above.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims, as interpreted by the description and drawings.

## Claims

1. An IC memory, comprising:
a plural number of data memory portions;
an antenna, which is configured to conduct transmission of radio waves between an external communication apparatus;
a signal process portion, which is configured to conduct modulation/demodulation process upon a signal received on said antenna; and
a protocol process portion, which is configured to conduct protocol processing, including transmitting command and data, which are presented by said signal, to said external communication apparatus, writing data into said data memory portion, and managing an internal condition of said IC memory, wherein
at least one of said data memory portion is a memory portion for exclusive use of readout, from which data is read out, and
other data memory portions of said memory portion for exclusive use of readout are memory portions, from which data is read out, or into which data is written.

2. The IC memory, as described in the claim 1, wherein
said memory portion for exclusive use of readout is a memory portion, into which the data is written at a fist change after being manufactured or when being manufactured, and after writing mentioned above, the data can be read out only.

3. The IC memory, as described in the claim 1, wherein said protocol process portion comprises:
a data readout enabling/disenabling setout portion, which is configured to determine an access setup, in relation to enabling/disenabling of readout or write-in, upon the other data memory portions of saidmemory portion for exclusive use of readout; and
an access control portion, which is configured to control the readout and the write-in of said other data memory portions of said memory portion for exclusive use of readout, after determining said access setup, and said memory portion for exclusive use of readout is able to do only readout.

4. The IC memory, as described in the claim 1, wherein
within said memory portion for exclusive use of readout is stored specific information assigned to said IC memory.

5. The IC memory, as described in the claim 1, wherein
within said memory portion for exclusive use of readout is stored specific information assigned to said IC memory, and
said specific information has a one value selected from the following values A-D:
(A) random values,
(B) serial values, which do not duplicate with specific information assigned to other IC memory and in a continuous relationship with the specific information assigned to said other IC memory,
(C) discontinuous value, which do not duplicate with the specific information assigned to the other IC memory and not in the continuous relationship with the specific information assigned to said other IC memory, and
(D) values equal to the specific information assigned to the other IC memory.

6. The IC memory, as described in the claim 1, wherein
within said memory portion for exclusive use of readout is stored specific information assigned to said IC memory,
said specific information includes group identification information for identifying to be different from other IC memory groups, which is assigned to a one IC memory group selected from a predetermined number of IC memory groups, and
an individual number, which is assigned to said IC memory within said IC memory group selected, and
said individual number has a one value selected from the following values A-D:
(A) random values,
(B) serial values, which do not duplicate with specific information assigned to other IC memory and in a continuous relationship with the specific information assigned to said other IC memory,
(C) discontinuous value, which do not duplicate with the specific information assigned to the other IC memory and not in the continuous relationship with the specific information assigned to said other IC memory, and
(D) values equal to the specific information assigned to the other IC memory, and
selection of which one of said values A-D is depending upon said one IC memory group selected.

7. The IC memory, as described in the claim 1, wherein
within said memory portion for exclusive use of readout is stored specific information assigned to said IC memory, and
calculation result data obtained by conducting a predetermined function calculation upon said specific information is stored within the other data memory portions of said memory portion for exclusive use of readout.

8. The IC memory, as described in the claim 1, wherein
within said memory portion for exclusive use of readout is stored specific information assigned to said IC memory, and
calculation result data obtained by conducting a predetermined function calculation upon data, including said specific information and a part of the data stored in the other data memory portions, is stored within the other data memory portions of said memory portion for exclusive use of readout.

9. The IC memory, as described in the claim 1, wherein
said calculation result data is made from cryptography calculation with using a common key or a public key.

10. The IC memory, as described in the claim 7, wherein
said calculation result data is calculated, but without using the function calculation.

11. The IC memory, as described in the claim 8, wherein
said calculation result data is made from cryptography calculation with using a common key or a public key.

12. The IC memory, as described in the claim 8, wherein
said calculation result data is calculated, but without using the function calculation.

13. The IC memory, as described in the claim 1, wherein
a readout command to said memory portion for exclusive use of readout, to which said protocol process portion is responsible, has a command code different from that of readout commands to the other data memory portions, to which said protocol process portion is responsible.

14. The IC memory, as described in the claim 1, wherein
a process of protocol is executed, differently, for said external communication apparatus, in case when said protocol process portion conducts a readout operation onto said memory portion for exclusive use of readout and in case when said protocol process portion conducts a readout or a write-in operation onto said other data memory portion.

15. The IC memory, as described in the claim 1, wherein
said IC memory is RFID, and has
a RESERVED bank, a UII bank, a TID bank, and a USER bank, as the other data memory portions of said memory portion for exclusive use of readout, and
said calculation result data is stored within said USER bank.

16. An external communication apparatus for conducting communication with the IC memory as described in the claim 1, comprising:
an antenna, which is configured to conduct transmission of radio waves between said IC memory;
a signal process portion, which is configured to conduct modulation/demodulation process upon a signal received on said antenna;
a protocol process portion, which is configured to conduct processing on a protocol of an external communication apparatus, transmitting command and data, which are presented by said signal, between said IC memory; and
a calculate portion, which is configured to calculate out calculation result data through a predetermined function calculation, wherein
said external communication apparatus protocol process portion comprises:
a portion, which is configured to read out data from said memory portion for exclusive use of readout within said IC memory;
a portion, which is configured to deliver the data, being read out from said memory portion for exclusive use of readout, to said calculate portion, and to receive the calculation result data, being calculated out by said calculate portion; and
a portion, which is configured to write said calculation result data into other predetermined data memory portions of said memory portion for exclusive use of readout.

17. The external communication apparatus, as described in the claim 16, further comprising:
a portion, which is configured to determine on whether the data within said IC memory is proper or not, after comparing the calculation result data received from said calculate portion and the data read out from said predetermined data memory portions.

18. The external communication apparatus, as described in the claim 16, wherein a process is conducted on different protocol, for said IC memory, in case where a readout command to said memory portion for exclusive use of readout, which said external communication apparatus protocol process portion transmits to said IC memory, is different from a readout command to the other memory portion, which said external communication apparatus protocol process portion transmits to said IC memory, in command code thereof, or
when said external communication apparatus protocol process portion conducts the readout process of said memory portion for exclusive use of readout, or when said external communication apparatus protocol process portion conducts the readout process or the write-in process of said other data memory portion.

19. A system, comprising:
the IC memory, as described in the claim 1; and
the external communication apparatus, as described in the claim 16.

20. A system, comprising:
the IC memory, as described in the claim 1;
the external communication apparatus, as described in the claim 16; and
the external communication apparatus, as described in the claim 17.

21. A method, for verifying properness of data within the IC memory described in the claim 1, comprising the following steps of:
a step for reading out data from said memory portion for exclusive use of readout within said IC memory;
a step for obtaining calculation result data by conducting a predetermined function calculation upon the data, which is read out from said memory portion for exclusive use of readout;
a step for reading out from a predetermined one of the other data memory portions of said memory portion for exclusive use of readout within said IC memory; and
a step for determining on whether the data within said IC memory is proper one or not, after comparing the calculation result data receiving from said calculate portion and the data read out from said predetermined data memory portion.

22. A method, for verifying properness of data within the IC memory described in the claim 16, comprising the following steps of:
a step for reading out data from said memory portion for exclusive use of readout within said IC memory;
a step for obtaining calculation result data by conducting a predetermined function calculation upon the data, which is read out from said memory portion for exclusive use of readout;
a step for reading out from a predetermined one of the other data memory portions of said memory portion for exclusive use of readout within said IC memory; and
a step for determining on whether the data within said IC memory is proper one or not, after comparing the calculation result data receiving from said calculate portion and the data read out from said predetermined data memory portion.
